# EUROPEAN PATENT SPECIFICATION

(11) **EP 3 162 486 B1**
(45) Date of publication and mention of the grant of the patent: **26.05.2021**
(21) Application number: 15829946.1
(22) Date of filing: 07.08.2015
(51) Int. Cl.: B23K 20/00, B32B 7/12

(54) **METAL FOAM STACK AND MANUFACTURING METHOD THEREFOR**
METALLSCHAUMSTAPEL UND HERSTELLUNGSVERFAHREN DAFÜR
EMPILEMENT DE MOUSSE MÉTALLIQUE ET SON PROCÉDÉ DE FABRICATION

(30) Priority: 07.08.2014 KR 20140101919
(43) Date of publication of application: 03.05.2017
(73) Proprietor: Alantum, Seongnam-si, Gyeonggi-do 13229 (KR)
(72) Inventor: KIM, Jong Kwang, Seoul 05619 (KR); CHOI, Byoung Kwon, Daejeon 34023 (KR); JANG, Myung Joon, Incheon 22365 (KR)
(74) Representative: Manitz Finsterwald Patent- und Rechtsanwaltspartnerschaft mbB
(86) International application number: PCT/KR2015/008306
(87) International publication number: WO 2016/021988

(56) References cited:
- JP-A- 2004 273 359
- JP-A- 2014 097 529
- JP-B2- 4 061 170
- KR-A- 20130 107 433
- KR-B1- 101 338 508

## Description

### [Technical Field]

The present invention relates to a metal foam stack and a manufacturing method thereof.

### [Background Art]

In general, metal foam refers to porous metal having a large amount of bubbles inside a metal material.

The metal foam is divided into an open cell type or a closed cell type according to a shape of a bubble included therein. In the open cell type, the bubbles are present in a connected form, and it is easy for gas or a fluid to pass through along the bubbles. However, in the closed cell type, the bubbles are not connected with one another and are independently present, and it is not easy for gas or a fluid to pass through along the bubbles.

Since the metal form in the open cell type has a similar structure to that of a bone of a human body, so that a structure thereof is stable, and has a physical property in that the metal form has an extremely large ratio of a surface area to a unit volume and is light, so that the metal form in the open cell type may be used for various usages.

The metal foam is used in various industrial fields, such as an electrode of a battery, a component of a fuel cell, a filter for a particulate filtering apparatus, a contamination control device, a catalyst supporter, and an audio component.

However, in the related art, in order to manufacture the metal foam stack, a process of simply laminating metal foam and metal foam and then sintering is performed, so that contraction may be seriously generated in a center portion and a lateral portion of the manufactured metal foam stack. Accordingly, a porous structure may be destroyed and it may be difficult to manufacture a metal foam stack having a desired thickness.

KR 101 338 508 B1 discloses a method of manufacturing a metal foam stack wherein the method of forming the metal foam stack comprises the steps of applying external pressure and a heat treatment.

JP 4 061 170 B2 discloses a method of manufacturing a microstructure superplastic material having sandwich structure comprising a plate-shaped aluminium foam used as a core material and a face material.

KR 2013 0107 433 A discloses a catalyst carrier for selective catalytic reduction having a three-dimensional reaction structure comprising first and second flat metal foams and a first unit catalyst carrier portion including a nonplanar third metal foam disposed between the first metal foam and the second metal foam.

### [DISCLOSURE]

### [Technical Problem]

The present invention has been made in an effort to provide a high quality metal foam stack, in which destruction of a porous structure is minimized and which is controlled to have a desired thickness.

The present invention has also been made in an effort to provide a method of manufacturing a metal foam stack, which may minimize destruction of a porous structure and which may manufacture a metal foam stack with a desired thickness.

### [Technical Solution]

The objects underlying the present invention are achieved by a metal foam stack according to claim 1 and a method of manufacturing a metal foam stack according to claim 6. Preferred embodiments are defined in the dependent claims.

In order to implement other problems that are not mentioned in detail in addition to the above problems, an exemplary embodiment according to the present invention may be used.

The first bonding member may include at least one of metal powder and brazing foil.

The number of stack units may be two or more, and the metal foam stack may include: a first stack unit; a second bonding member positioned on the first stack unit; and a second stack unit positioned on the second bonding member, and the second bonding member may include at least one of metal powder, brazing foil, a ceramic bond, and a metal glue.

The first metal foam sheet or the second metal foam sheet may include one or more of an Ni-based metal foam, a Fe-based metal foam, and a Cu-based metal foam.

The metal powder may be alloy powder, and may include nickel (Ni) of about 15 wt% or more or chrome (Cr) of about 20 wt% or more.

Yet another exemplary embodiment of the present invention provides a method of manufacturing a metal foam according to claim 6.

The second bonding member may include at least one of metal powder, slurry including metal powder, brazing foil, a ceramic bond, and a metal glue.

The applying of the external pressure and the performing of the heat treatment may be simultaneously performed.

The metal powder may be alloy powder, and may include nickel (Ni) of about 15 wt% or more or chrome (Cr) of about 20 wt% or more.

The slurry including the metal powder may be slurry for bonding, and the metal powder of the slurry for bonding may include chrome (Cr) of about 30 wt% or more, molybdenum (Mo) of about 15 wt% or more, or niobium (Nb) of about 3 wt% or more.

The first metal foam sheet or the second metal foam sheet may include one or more of Ni-based metal foam, Fe-based metal foam, and Cu-based metal foam.

The applying of the external pressure includes:
disposing a plate on
an upper surface of a metal foam sheet positioned at an uppermost portion of the metal foam stack; and disposing a loading member on the plate so as to load an entire section of the plate.

The plate may be formed of a material including one or more of molybdenum (Mo), titanium (Ti), stainless steel, and a ceramic block.

The performing of the heat treatment may include: performing debinding of removing a binder ingredient from the metal foam stack; and sintering the metal foam stack.

The debinding may be performed at about 500°C to about 600°C for one to two hours.

The sintering may be performed at about 1,100 to 1,300°C for about one to two hours.

### [Advantageous Effects]

According to the metal foam stack and the method of manufacturing the same according to the exemplary embodiment of the present invention, it is possible to provide the high quality metal foam stack, in which destruction of a porous structure is minimized and which is controlled to have a desired thickness.

### [Description of the Drawings]

FIG. 1 is a picture of a metal foam sheet including an open cell type.
FIG. 2 is a schematic diagram illustrating a metal foam stack according to an exemplary embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

It will be understood that when an element is referred to as being "on" or "over" another element, it can be directly on the other element or intervening elements may also be present. Contrary to this, when an element is referred to as being "directly on" another element, intervening elements are not present.

The terminologies used herein are set forth to illustrate a specific exemplary embodiment, and do not intend to limit the present invention. It should be noted that, as used in the specification and the appended claims, the singular forms include plural references unless the context clearly dictates otherwise. It will be further understood that the terms "comprises" and/or "comprising," when used in this specification, specify the presence of stated properties, regions, integers, steps, operations, elements, and/or components, but do not preclude the presence or addition of one or more other properties, regions, integers, steps, operations, elements, components, and/or groups.

Terms, such as "under" and "on", representing a relative space may be used for more easily explaining a relation of one part with respect to another part illustrated in the drawing. The terms are intended to include other meanings or operations of a device, which is being used, together with an intended meaning in the drawings.

In the specification of the present invention, "a first" or "a second" does not mean only the different type of material and composition, and in the configuration of the entire invention, even though the materials and the compositions are the same, the term may be used as a meaning for discriminating a position of a configuration described after "a first" or "a second".

Unless they are not defined, all terms including technical terms and scientific terms used herein have the same meaning as the meaning generally understood by the person with ordinary skill in the art to which the present invention belongs. The commonly used terminologies that are defined a dictionary are further interpreted to have the meaning that coincides with the contents that are disclosed in relating technical documents and the currently disclosed, but not as the ideal or very official meaning unless they are not defined.

Metal foam may be divided into an open type or a closed type according to whether a cell or a pore formed inside the metal foam is closed or opened, and metal foam according to an exemplary embodiment of the present invention is open type metal foam.

A process of manufacturing the open type metal foam will be described below. A conductive porous body is prepared by depositing titanium or a titanium alloy on a surface of an organic porous body by using electroplating. A metal is electroplated on a surface of the conductive porous body by making a metal electroplating solution pass through the conductive porous body. An organic porous body component is removed by heat treating the metal plated conductive porous body.

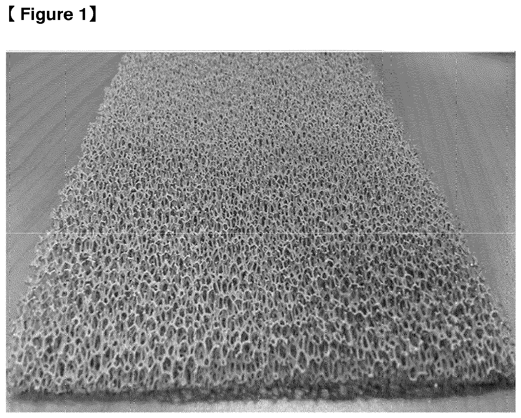

FIG. 1 is a picture of a metal foam sheet including an open cell type. Referring to FIG. 1, in the open cell type, cells or pores inside the metal foam are connected with one another in an irregular shape, and gas or a fluid more easily passes through the metal foam. The metal foam may be a sheet shape cut in a predetermined size, and may be formed in a quadrangular shape, but is not limited thereto, and may be formed in various shapes. Further, polyurethane may be used as the organic porous body of the metal foam.

Further, the metal foam sheet may be formed with a thickness of a maximum of about 10 mm or less, for example, about 1.6 mm to 3.0 mm.

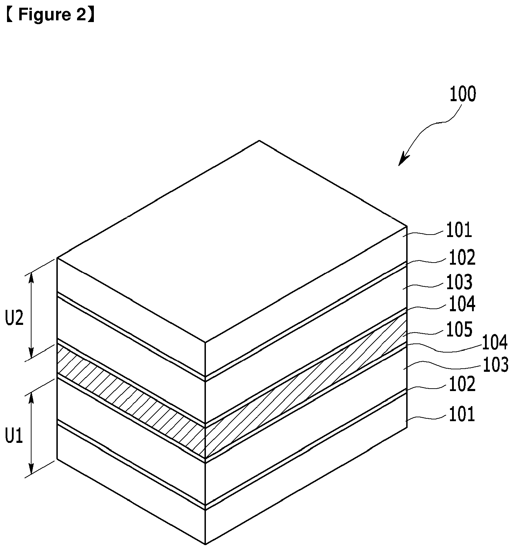

FIG. 2 is a schematic diagram illustrating a metal foam stack 100 according to an exemplary embodiment of the present invention.

Referring to FIG. 2, the metal foam stack 100 according to the exemplary embodiment of the present invention includes one or more stack units U1 and U2 including a first metal foam sheet 101 including an open type cell, in which internal cells are connected with one another therein, a first bonding member 102 positioned on the first metal foam sheet 101, and a second metal foam sheet 103 positioned on the first bonding member 102 and including an open type cell, in which internal cells are connected with one another therein.

In this case, the material forming the first bonding member 102 is diffused between the first metal foam sheet 101 and the second metal foam sheet 103 in a solid phase. Interfaces between the first metal foam sheet 101, the second metal foam sheet 103, and the first bonding member 102 may include a material in a form mixed in an atomistic level. A material forming the first bonding member 102 positioned between the first metal foam sheet 101 and the second metal foam sheet 103 may be atomically diffused for the first metal foam sheet 101 and the second metal foam sheet 103 while passing through a heat treatment process according to a manufacturing operation. In this case, the materials forming the interface of the first metal foam sheet 101 and the first bonding member 102 and the interface of the second metal foam sheet 103 and the first bonding member 102 have forms diffused in the atomistic level by the heat treatment, so that bonding force between the first and second metal foam sheets 101 and 103 may be increased.

The first bonding member 102 may include at least one of metal powder and brazing foil.

The number of stack units U1 and U2 may be two or more.

The metal foam stack 100 includes the first stack unit U1, the second bonding member 104 positioned on the first stack unit U1, and the second stack unit U2 positioned on the second bonding member 104.

The second bonding member 104 includes at least one of metal powder, brazing foil, a ceramic bond, and metal glue.

The first metal foam sheet 101 or the second metal foam sheet 103 may include one or more among Ni-based metal foam, Fe-based metal foam, and Cu-based metal foam.

The metal powder is alloy powder, and includes nickel (Ni) of about 15 wt% or more or chrome (Cr) of about 20 wt% or more.

In the stack unit of the metal foam stack, the bonding member and a heterogeneous member may be sequentially positioned between the pair of metal foam sheets including the open type cells connected with one another inside the stack unit, and one or more stack units may be piled to form the metal foam stack.

The metal foam stack 100 according to the exemplary embodiment of the present invention may include the first stack unit U1, the second bonding member 104 positioned on the first stack unit U1, a heterogeneous member 105 positioned on the second bonding member 104, the second bonding member 104 positioned on the heterogeneous member 105, and the second stack unit U2 positioned on the second bonding member 104.

The heterogeneous member 105 may have a material different from those of the first metal foam sheet 101 and the second metal foam sheet 103. The heterogeneous member 105 are formed of a stainless steel material. The heterogeneous member 105 may be used for improving thermal or electric conductivity through metallic bonding with the metal foam sheet. The metal foam itself has high thermal or electric conductivity, but it is impossible to increase a bonding area between the metal foams only with the general bonding using an adhesive and the like, so that when the metal foams are bonded by the general bonding, thermal or electric conductivity between the metal foams may be sharply degraded. Further, the heterogeneous member 105 may be a protective material for preventing the metal foam sheet from being destroyed or damaged.

Average tensile strength in a direction of a lamination height of the metal foam stack 100 is different according to an application field, but as the tensile strength is high, the metal foam stack 100 may have resistance for strong external stress and may maintain a predetermined shape.

A method of manufacturing the metal foam stack according to an exemplary embodiment of the present invention includes an operation of preparing a first metal foam sheet and a second metal foam sheet, which include open type cells connected with one another inside thereof, an operation of forming the metal foam stack including one or more stack units by positioning a first bonding member between the first metal form sheet and the second metal foam sheet, an operation of applying external pressure to the metal foam stack, and an operation of performing a heat treatment for heating the metal foam stack.

Hereinafter, overlapping contents to the aforementioned contents will be omitted.

Hereinafter, the method of manufacturing the metal foam stack according to the exemplary embodiment of the present invention will be described in detail according to each operation.

First, the first metal foam sheet and the second metal foam sheet, each of which includes open type cells, in which internal cells are connected with one another, are prepared. The first metal foam sheet or the second metal foam sheet may include one or more among Ni-based metal foam, Fe-based metal foam, and Cu-based metal foam.

Next, the metal foam stack including one or more stack units is formed by positioning the first bonding member between the first metal foam sheet and the second metal foam sheet. Here, the first bonding member may include at least one of metal powder, slurry including metal powder, and brazing foil.

The metal powder is alloy powder, and includes nickel (Ni) of about 15 wt% or more or chrome (Cr) of about 20 wt% or more.

The slurry including the metal powder is slurry for bonding, and the metal powder of the slurry for bonding may include chrome (Cru) of about 30 wt% or more, molybdenum (Mo) of about 15 wt% or more, or niobium (Nb) of about 3 wt% or more. The slurry for bonding is alloy powder having a lower melting point than that of the general slurry, and may be used for the purpose of bonding the metal foam sheet.

The slurry including the metal powder may be positioned between the first metal foam sheet and the second metal foam sheet by being directly applied onto the metal foam sheet or dipping the metal foam sheet into the slurry. The metal powder included in the slurry may secure a good sintering contact between the metal foam sheets, and may be used for alloying. Before positioning the slurry including the metal powder, the metal powder of the slurry and a binder may be mixed by a mixer. In this case, a liquid, such as water, may be further added for easily mixing the powder and the binder.

Next, the operation of applying the external pressure to the metal foam stack is an operation of applying external pressure onto at least one surface of the metal foam stack in order to improve bonding force between the respective layers after closely contacting the respective layers and performing the heat treatment on the layers before the heat treatment of the metal foam stack.

The operation of applying the external pressure includes an operation of disposing a plate on an upper surface of the metal foam sheet positioned at the topmost portion in the metal foam stack, and an operation of disposing a loading member on the plate so as to load the entire sections of the plate. When the plate is in contact with the metal foam sheet, the plate may be a material having low reactivity. For example, the plate may be a material including one or more of molybdenum (Mo), titanium (Ti), stainless steel, and a ceramic block. Molybdenum (Mo) or titanium (Ti) has low reactivity, so that it is possible to prevent a reaction with the contacting metal foam during sintering. When the external pressure is applied to the metal foam stack in the operation of applying the external pressure, the loading member may pressurize the metal foam stack with a pressure of about 3 to 4 g/cm² so that a thickness of the metal foam stack may be decreased within the range of about 5 to 10%. A high compression ratio is advantageous to sufficient bonding strength of the metal foam stack. Weight of the loading member has a predetermined size, but may be variously changed according to a compression ratio of the metal foam stack.

Before the operation of applying the external pressure, an operation of applying pre-presure to the metal foam stack and removing the pre-pressure is performed. Herein, the application of the pre-pressure may be performed for a relatively short time compared to a time of the operation of applying the external pressure, and may be performed by a press machine. Through the application and the removal of the pre-press, bonding force between the respective layers may be further improved after the heat treatment operation.

Next, the operation of performing the heat treatment for heating the metal foam stack is an operation of heating the metal foam stack so that the first and second metal foam sheets are stably bonded through the first bonding member according to the atomic diffusion of the material of the first bonding member positioned between the first and second metal foam sheets.

The operation of applying the external pressure and the operation of performing the heat treatment may be simultaneously performed. When the operation of applying the external pressure and the operation of performing the heat treatment are simultaneously performed, bonding force between the layers of the manufactured metal foam stack may be further improved compared to the case where the operation of applying the external pressure and the operation of performing the heat treatment are separately performed.

The operation of performing the heat treatment may include an operation of performing debinding for removing a binder component from the metal foam stack, and an operation of sintering the metal foam stack.

The operation of performing the debinding may be performed for about one to two hours at about 500 to 600°C. Within the temperature range, the binder may be efficiently removed. Further, within the time range, the binder may be efficiently removed.

The operation of performing the sintering may be performed for about one to two hours at about 1,100 to 1,300°C. Within the temperature range, strong bonding between the metal foam sheet and the bonding member or the heterogeneous member may be efficiently bonded. Further, within the time range, strong bonding between the metal foam sheet and the bonding member or the heterogeneous member may be efficiently formed.

The second bonding member may include at least one of metal powder, slurry including metal powder, brazing foil, a ceramic bond, and a metal glue.

Descriptions for the operation of applying external pressure to the metal foam stack, and the operation of performing the heat treatment for heating the metal foam stack are the same as those of the aforementioned contents, so that the descriptions will be omitted below.

Hereinafter, the present invention will be described in more detail with reference to Examples, but the following Examples are Examples of the present invention, and the present invention is not limited by the following Examples.

### <Reference Example

### 1>- Manufacture metal foam stack

First, two metal foam sheets made of a material of NiCrAI and having a pore size of about 1,200 µm are prepared. Each of a horizontal length and a vertical length of the metal foam sheet is about 280 mm. Next, a binder solution, in which polyethyleneimine (Lupasol) of about 25g and water of about 1 kg are mixed, is coated on a surface of one metal foam sheet by a spray method. Subsequently, metal powder of NiCrAI is coated by the spray method. Next, pre-pressure is applied to the formed metal foam stack by using a press machine so that the metal foam stack is pressurized to have about 20% of an initial thickness of the metal foam stack. Next, the pressure applied during the application of the pre-pressure is removed, and pressure is applied by a method of laying a metal plate (molybdenum or ceramic block) having predetermined weight on the metal foam stack again and a heat treatment is simultaneously performed at 1,280°C, to manufacture the metal foam stack, of which each of a horizontal length and a vertical length is about 280 mm.

### <Comparative Example 1>- Manufacture metal foam stack

A metal foam stack is manufactured by performing the same method as that of Example 1 except that pre-pressure is not applied.

### <Comparative Example 2>- Manufacture metal foam stack

A metal foam stack is manufactured by performing the same method as that of Example 1 except that a heat treatment is performed without applying pressure through a loading member.

### <Experimental Example 1>-Measure tensile strength

In order to measure tensile strength in a stack direction, an experiment is performed on the metal foam stacks manufactured in Reference

### Example 1 and

### Comparative Examples 1 and 2 by a method described below.

Each of the metal foam stacks having the horizontal length and the vertical length of 280 mm manufactured in Reference

### Example 1 and Comparative

Examples 1 and 2 is notched by using a band saw to have the horizontal length and the vertical length of about 400 mm. By the method, 49 samples are prepared. Tensile strength is measured for the cut samples by about 49 times by using a universal testing machine (UTM), and an average value thereof is referred to as bonding strength.

Referring to Table 1 below, Reference Example 1 including the operation of applying the pre-pressure or the operation of applying pressure through the loading member represents more excellent average tensile strength than those of Comparative Examples 1 and 2.

**(Table 1)**

| | Process condition | | Average tensile strength (kgf) |
|---|---|---|---|
| Example 1 | Apply pre-pressure, Use loading member | 1,280°C | 185 |
| Comparative Example 1 | Apply no pre-pressure, Use loading member | 1,280°C | 99 |
| Comparative Example 2 | Apply pre-pressure, Not use loading member | 1,280°C | 28 |

## Claims

1. A metal foam stack, comprising:
two or more stack units,
wherein the stack unit includes:
a first metal foam sheet including an open cell, in which a plurality of internal cells is connected with one another;
a first bonding member positioned on the first metal foam sheet; and
a second metal foam sheet positioned on the first bonding member, and including an open cell, in which a plurality of internal cells is connected with one another,
the metal foam stack includes a first stack unit, a second bonding member positioned on the first stack unit, a heterogeneous member positioned on the second bonding member, a second bonding member positioned on the heterogeneous member, and a second stack unit positioned on the second bonding member,
materials of an interface between the first metal foam sheet and the first bonding member and an interface between the second metal foam sheet and the first bonding member are atomically diffused, and
the heterogeneous member includes a different material from materials of the first metal foam sheet and the second metal foam sheet,
wherein the heterogenous member is formed of a stainless steel material.

2. The metal foam stack of claim 1, wherein:
the first bonding member includes at least one of metal powder and brazing foil.

3. The metal foam stack of claim 1, wherein:
the second bonding member includes at least one of metal powder, brazing foil, a ceramic bond, and a metal glue.

4. The metal foam stack of claim 1, wherein:
the first metal foam sheet or the second metal foam sheet includes one or more of Ni-based metal foam, Fe-based metal foam, and Cu-based metal foam.

5. The metal foam stack of claim 1, wherein:
the metal powder is alloy powder, and includes nickel (Ni) of 15 wt% or more or chrome (Cr) of 20 wt% or more.

6. A method of manufacturing a metal foam stack, comprising:
preparing a first stack unit;
preparing a second stack unit;
forming a metal foam stack including two or more stack units by positioning two layers of second bonding members between the first stack unit and the second stack unit, and positioning a heterogeneous member between the two layers of second bonding members;
applying pre-pressure to the metal foam stack and removing the pre-pressure before the applying of the external pressure;
applying external pressure to the metal foam stack; and
performing a heat treatment by heating the metal foam stackwherein each of the preparing a first stack unit and the preparing a second stack unit includes:
preparing a first metal foam sheet and a second metal foam sheet, each of which includes an open cell, in which internal cells are connected with one another;
forming the first stack unit and the second stack unit by positioning a first bonding member between the first metal foam sheet and the second metal foam sheet;
applying pre-pressure to the first stack unit and the second stack unit and removing the pre-pressure before the applying of the external pressure,
applying external pressure to the first stack unit and the second stack unit; and
performing a heat treatment by heating the first stack unit and the second stack unit,
materials of an interface between the first metal foam sheet and the first bonding member and an interface between the second metal foam sheet and the first bonding member are atomically diffused, and
the heterogeneous member has a different shape or includes a different material from shapes and materials of the first metal foam sheet and the second metal foam sheet,
wherein the applying of the external pressure to the metal foam stack includes:
disposing a plate on an upper surface of a metal foam sheet positioned at an uppermost portion of the metal foam stack;
and disposing a loading member on the plate so as to load an entire section of the plate.

7. The method of claim 6, wherein:
the first bonding member includes at least one of metal powder, slurry including metal powder, and brazing foil.

8. The method of claim 6, wherein:
the second bonding member includes at least one of metal powder, slurry including metal powder, brazing foil, a ceramic bond, and a metal glue.

9. The method of claim 6, wherein:
the applying of the external pressure to the metal foam stack and the performing of the heat treatment by heating the metal foam stack are simultaneously performed, and
the applying external pressure to the first stack unit and the second stack unit and the performing a heat treatment by heating the first stack unit and the second stack unit are simultaneously performed.

10. The method of claim 6, wherein:
the metal powder is alloy powder, and includes nickel (Ni) of 15 wt% or more or chrome (Cr) of 20 wt% or more.

11. The method of claim 7 or 8, wherein:
the slurry including the metal powder is slurry for bonding, and
the metal powder of the slurry for bonding includes chrome (Cr) of 30 wt% or more, molybdenum (Mo) of 15 wt% or more, or niobium (Nb) of 3 wt% or more.

12. The method of claim 6, wherein:
the first metal foam sheet or the second metal foam sheet includes one or more of Ni-based metal foam, Fe-based metal foam, and Cu-based metal foam.

13. The method of claim 6, wherein:
the plate is formed of a material including one or more of molybdenum (Mo) titanium (Ti), stainless steel, and a ceramic block.

14. The method of claim 6, wherein:
the performing of the heat treatment by heating the metal foam stack includes:
performing debinding of removing a binder ingredient from the metal foam stack; and
sintering the metal foam stack.

15. The method of claim 14, wherein:
the debinding is performed at 500 to 600°C for one to two hours.

16. The method of claim 14, wherein:
the sintering is performed at 1,100 to 1,300°C for one to two hours.

## Patentansprüche

1. Metallschaumstapel, welcher umfasst:
zwei oder mehr Stapeleinheiten,
wobei die Stapeleinheit enthält:
eine erste Metallschaumplatte, die eine offene Zelle enthält, in der eine Mehrzahl innerer Zellen miteinander verbunden ist;
ein erstes Verbindungselement, das auf der ersten Metallschaumplatte positioniert ist; und
eine zweite Metallschaumplatte, die auf dem ersten Verbindungselement positioniert ist und eine offene Zelle enthält, in der eine Mehrzahl innerer Zellen miteinander verbunden ist,
wobei der Metallschaumstapel eine erste Stapeleinheit, ein zweites Verbindungselement, das auf der ersten Stapeleinheit positioniert ist, ein heterogenes Element, das auf dem zweiten Verbindungselement positioniert ist, ein zweites Verbindungselement, das auf dem heterogenen Element positioniert ist, und eine zweite Stapeleinheit, die auf dem zweiten Verbindungselement angeordnet ist, enthält,
Materialien einer Grenzfläche zwischen der ersten Metallschaumplatte und dem ersten Verbindungselement und einer Grenzfläche zwischen der zweiten Metallschaumplatte und dem ersten Verbindungselement atomar diffundiert sind, und
das heterogene Element ein Material enthält, das von den Materialien der ersten Metallschaumplatte und der zweiten Metallschaumplatte verschieden ist,
wobei das heterogene Element aus einem rostfreien Stahlmaterial gebildet ist.

2. Metallschaumstapel nach Anspruch 1, wobei:
das erste Verbindungselement mindestens eines von Metallpulver und Hartlotfolie enthält.

3. Metallschaumstapel nach Anspruch 1, wobei:
das zweite Verbindungselement mindestens eines von Metallpulver, Hartlotfolie, einer keramischen Bindung und einem Metallkleber enthält.

4. Metallschaumstapel nach Anspruch 1, wobei:
die erste Metallschaumplatte oder die zweite Metallschaumplatte eines oder mehrere von Ni-basiertem Metallschaum, Fe-basiertem Metallschaum und Cu-basiertem Metallschaum enthält.

5. Metallschaumstapel nach Anspruch 1, wobei:
das Metallpulver Legierungspulver ist und Nickel (Ni) zu 15 Gewichtsprozent oder mehr oder Chrom (Cr) zu 20 Gewichtsprozent oder mehr enthält.

6. Verfahren zur Fertigung eines Metallschaumstapels, welches umfasst:
Herstellen einer ersten Stapeleinheit;
Herstellen einer zweiten Stapeleinheit;
Bilden eines Metallschaumstapels, der zwei oder mehr Stapeleinheiten enthält, durch Positionieren zweier Schichten zweiter Verbindungselemente zwischen der ersten Stapeleinheit und der zweiten Stapeleinheit und Positionieren eines heterogenen Elements zwischen den zwei Schichten zweiter Verbindungselemente;
Anlegen von Vordruck an den Metallschaumstapel, und Entfernen des Vordrucks vor dem Anlegen des äußeren Drucks;
Anlegen von äußerem Druck an den Metallschaumstapel; und
Durchführen einer Wärmebehandlung durch Erwärmen des Metallschaumstapels, wobei das Herstellen einer ersten Stapeleinheit und das Herstellen einer zweiten Stapeleinheit jeweils enthält:
Herstellen einer ersten Metallschaumplatte und einer zweiten Metallschaumplatte, wovon jede eine offene Zelle enthält, in der innere Zellen miteinander verbunden sind;
Bilden der ersten Stapeleinheit und der zweiten Stapeleinheit durch Positionieren eines ersten Verbindungselements zwischen der ersten Metallschaumplatte und der zweiten Metallschaumplatte;
Anlegen von Vordruck an der ersten Stapeleinheit und der zweiten Stapeleinheit, und Entfernen des Vordrucks vor dem Anlegen des äußeren Drucks,
Anlegen von äußerem Druck an der ersten Stapeleinheit und der zweiten Stapeleinheit; und
Durchführen einer Wärmebehandlung durch Erwärmen der ersten Stapeleinheit und der zweiten Stapeleinheit,
wobei Materialien einer Grenzfläche zwischen der ersten Metallschaumplatte und dem ersten Verbindungselement und einer Grenzfläche zwischen der zweiten Metallschaumplatte und dem ersten Verbindungselement atomar diffundiert werden, und
das heterogene Element eine Form aufweist oder ein Material enthält, die von den Formen und Materialien der ersten Metallschaumplatte und der zweiten Metallschaumplatte verschieden sind,
wobei das Anlegen des äußeren Drucks an den Metallschaumstapel enthält:
Anordnen einer Platte auf einer oberen Oberfläche einer Metallschaumplatte, die in einem obersten Abschnitt des Metallschaumstapels positioniert ist;
und Anordnen eines Belastungselements auf der Platte, so dass ein gesamter Querschnitt der Platte belastet wird.

7. Verfahren nach Anspruch 6, wobei:
das erste Verbindungselement mindestens eines von Metallpulver, Metallpulver enthaltender Aufschlämmung und Hartlotfolie enthält.

8. Verfahren nach Anspruch 6, wobei:
das zweite Verbindungselement mindestens eines von Metallpulver, Metallpulver enthaltender Aufschlämmung, Hartlotfolie, einer keramischen Bindung und einem Metallkleber enthält.

9. Verfahren nach Anspruch 6, wobei:
das Anlegen des äußeren Drucks an den Metallschaumstapel und das Durchführen der Wärmebehandlung durch Erwärmen des Metallschaumstapels gleichzeitig durchgeführt werden, und
das Anlegen von äußerem Druck an der ersten Stapeleinheit und der zweiten Stapeleinheit und das Durchführen einer Wärmebehandlung durch Erwärmen der ersten Stapeleinheit und der zweiten Stapeleinheit gleichzeitig durchgeführt werden.

10. Verfahren nach Anspruch 6, wobei:
das Metallpulver Legierungspulver ist und Nickel (Ni) zu 15 Gewichtsprozent oder mehr oder Chrom (Cr) zu 20 Gewichtsprozent oder mehr enthält.

11. Verfahren nach Anspruch 7 oder 8, wobei:
die das Metallpulver enthaltende Aufschlämmung eine Aufschlämmung zur Verbindung ist, und
das Metallpulver der Aufschlämmung zur Verbindung Chrom (Cr) zu 30 Gewichtsprozent oder mehr, Molybdän (Mo) zu 15 Gewichtsprozent oder mehr oder Niob (Nb) zu 3 Gewichtsprozent oder mehr enthält.

12. Verfahren nach Anspruch 6, wobei:
die erste Metallschaumplatte oder die zweite Metallschaumplatte eines oder mehrere von Ni-basiertem Metallschaum, Fe-basiertem Metallschaum und Cu-basiertem Metallschaum enthält.

13. Verfahren nach Anspruch 6, wobei:
die Platte aus einem Material gebildet ist, das eines oder mehrere von Molybdän (Mo), Titan (Ti), rostfreiem Stahl und einem Keramikblock enthält.

14. Verfahren nach Anspruch 6, wobei:
das Durchführen der Wärmebehandlung durch Erwärmen des Metallschaumstapels enthält:
Durchführen eines Entbindens zum Entfernen eines bindenden Inhaltsstoffes aus dem Metallschaumstapel; und
Sintern des Metallschaumstapels.

15. Verfahren nach Anspruch 14, wobei:
das Entbinden bei 500 bis 600°C für ein bis zwei Stunden durchgeführt wird.

16. Verfahren nach Anspruch 14, wobei:
das Sintern bei 1100 bis 1300°C für ein bis zwei Stunden durchgeführt wird.

## Revendications

1. Empilement de mousse métallique, comprenant :
deux ou plusieurs unités d'empilement,
dans lequel l'unité d'empilement inclut :
une première feuille de mousse métallique incluant une cellule ouverte, dans laquelle une pluralité de cellules internes sont connectées les unes aux autres ;
un premier élément de liaison positionné sur la première feuille de mousse métallique ; et
une seconde feuille de mousse métallique positionnée sur le premier élément de liaison et incluant une cellule ouverte, dans laquelle une pluralité de cellules internes sont connectées les unes aux autres,
l'empilement de mousse métallique inclut une première unité d'empilement, un second élément de liaison positionné sur la première unité d'empilement, un élément hétérogène positionné sur le second élément de liaison, un second élément de liaison positionné sur l'élément hétérogène, et une seconde unité d'empilement positionnée sur le second élément de liaison,
des matériaux d'une interface entre la première feuille de mousse métallique et le premier élément de liaison et d'une interface entre la seconde feuille de mousse métallique et le premier élément de liaison sont diffusés anatomiquement, et
l'élément hétérogène inclut un matériau différent des matériaux de la première feuille de mousse métallique et de la seconde feuille de mousse métallique,
dans lequel l'élément hétérogène est formé d'un matériau d'acier inoxydable.

2. Empilement de mousse métallique selon la revendication 1, dans lequel :
le premier élément de liaison inclut au moins un élément parmi une poudre métallique et un film de brasure.

3. Empilement de mousse métallique selon la revendication 1, dans lequel : le second élément de liaison inclut au moins un élément parmi une poudre métallique, une feuille de brasure, une liaison céramique et une colle métallique.

4. Empilement de mousse métallique selon la revendication 1, dans lequel :
la première feuille de mousse métallique ou la seconde feuille de mousse métallique inclut une ou plusieurs mousses métalliques parmi une mousse métallique à base de Ni, une mousse métallique à base de Fe et une mousse métallique à base de Cu.

5. Empilement de mousse métallique selon la revendication 1, dans lequel :
la poudre métallique est une poutre alliée et inclut un nickel (Ni) de 15 % en poids ou un ou plusieurs chromes (Cr) de 20 % en poids ou plus.

6. Procédé pour fabriquer un empilement de mousse métallique, comprenant les étapes consistant à :
préparer une première unité d'empilement ;
préparer une seconde unité d'empilement ;
former un empilement de mousse métallique incluant deux ou plusieurs unités d'empilement en positionnant deux couches de seconds éléments de liaison entre la première unité d'empilement et la seconde unité d'empilement, et positionner un élément hétérogène entre les deux couches de seconds éléments de liaison ;
appliquer une pré-pression sur l'empilement de mousse métallique et
enlever la pré-pression avant d'appliquer la pression externe ;
appliquer une pression externe sur l'empilement de mousse métallique ; et
exécuter un traitement thermique en chauffant l'empilement de mousse métallique, dans lequel chaque étape de préparation parmi la préparation d'une première unité d'empilement et la préparation d'une seconde unité d'empilement inclut les opérations consistant à :
préparer une première feuille de mousse métallique et une seconde feuille de mousse métallique, chacune incluant une cellule ouverte, dans laquelle des cellules internes sont connectées les unes aux autres ;
former la première unité d'empilement et la seconde unité d'empilement en positionnant un premier élément de liaison entre la première feuille de mousse métallique et la seconde feuille de mousse métallique ;
appliquer une pré-pression sur la première unité d'empilement et la seconde unité d'empilement et enlever la pré-pression avant d'appliquer la pression externe,
appliquer une pression externe sur la première unité d'empilement et la seconde unité d'empilement ; et
exécuter un traitement thermique en chauffant la première unité d'empilement et la seconde unité d'empilement,
des matériaux d'une interface entre la première feuille de mousse métallique et le premier élément de liaison et d'une interface entre la seconde feuille de mousse métallique et le premier élément de liaison sont diffusés atomiquement, et
l'élément hétérogène a une forme différente ou inclut un matériau différent des formes et des matériaux de la première feuille de mousse métallique et
de la seconde feuille de mousse métallique,
dans lequel l'application de la pression externe sur la feuille de mousse métallique inclut de :
disposer une plaque sur une surface supérieure d'une feuille de mousse métallique positionnée sur une portion la plus supérieure de l'empilement de mousse métallique ; et
de disposer un élément de chargement sur la plaque de manière à charger une section entière de la plaque.

7. Procédé selon la revendication 6, dans lequel
le premier élément de liaison inclut au moins un élément parmi une poudre métallique, une boue incluant une poudre métallique et un film de brasure.

8. Procédé selon la revendication 6, dans lequel :
le second élément de liaison inclut au moins un élément parmi une poudre métallique, une boue incluant une poudre métallique, un film de brasure, une liaison céramique et une colle métallique.

9. Procédé selon la revendication 6, dans lequel :
l'application de la pression externe sur l'empilement de mousse métallique et l'exécution du traitement thermique en chauffant l'empilement de mousse métallique sont exécutées simultanément, et
l'application de la pression externe sur la première unité d'empilement et la seconde unité d'empilement et l'exécution du traitement thermique en chauffant la première unité d'empilement et la seconde unité d'empilement sont exécutées simultanément.

10. Procédé selon la revendication 6, dans lequel :
la poudre métallique et une poudre alliée et inclut un nickel (Ni) de 15 % en poids ou un ou plusieurs chromes (Cr) de 20 % en poids ou plus.

11. Procédé selon la revendication 7 ou 8, dans lequel :
la boue incluant la poudre métallique est une boue de liaison, et
la poudre métallique de la boue de liaison inclut un chrome (Cr) de 30 % en poids ou plus, un molybdène (Mo) de 15 % en poids ou plus, ou un niobium (Nb) de 3 % en poids ou plus.

12. Procédé selon la revendication 6, dans lequel :
la première feuille de mousse métallique ou la seconde feuille de mousse métallique inclut une ou plusieurs mousses métalliques parmi une mousse métallique à base de Ni, une mousse métallique à base de Fe et une mousse métallique à base de Cu.

13. Procédé selon la revendication 6, dans lequel :
la plaque est formée d'un matériau incluant un ou plusieurs éléments parmi : molybdène (Mo) titane (Ti), acier inoxydable et un bloc céramique.

14. Procédé selon la revendication 6, dans lequel :
l'exécution du traitement thermique en chauffant l'empilement de mousse métallique inclut :
d'exécuter une élimination de liant consistant à enlever un ingrédient liant hors de l'empilement de mousse métallique ; et
de fritter l'empilement de mousse métallique.

15. Procédé selon la revendication 14, dans lequel :
l'élimination de liant est exécutée à 500 à 600 °C pendant une à deux heures.

16. Procédé selon la revendication 14, dans lequel :
le frittage est exécuté à 1 100 à 1 300 °C pendant une à deux heures.
